# EUROPÄISCHE PATENTSCHRIFT

(11) **EP 0 384 007 B1**
(45) Veröffentlichungstag und Bekanntmachung des Hinweises auf die Patenterteilung: **10.03.1993**
(21) Anmeldenummer: 89120748.2
(22) Anmeldetag: 09.11.1989
(51) Int. Cl.: F16F 13/00

(54) **Hülsengummifeder**
Rubber bushing
Manchon en caoutchouc

(30) Priorität: 24.02.1989 DE 3905686
(43) Veröffentlichungstag der Anmeldung: 29.08.1990
(73) Patentinhaber: Firma Carl Freudenberg, 69469 Weinheim (DE)
(72) Erfinder: Schwerdt, Hans-Werner, D-6947 Laudenbach (DE)

(56) Entgegenhaltungen:
- EP-A- 0 295 795
- DE-A- 3 046 419
- FR-A- 2 555 688
- PATENT ABSTRACTS OF JAPAN vol. 10, no. 295 (M-523)(2351) 07 Oktober 1986
- PATENT ABSTRACTS OF JAPAN vol. 9, no. 326 (M-441)(2049) 21 Dezember 1985

## Beschreibung

Die Erfindung betrifft eine Hülsengummifeder nach dem Oberbegriff von Anspruch 1.

Eine solche Hülsengummifeder ist aus der DE-A-30 46 419 bekannt. Sowohl die die Zwischenmasse als auch die Anschlußteile sind dabei ringförmig geschlossen, unnachgiebig ausgebildet und durch eine Hitzevulkanisierung mit den Federkörpern verbunden. In der sich an die Vulkanisierung der Federkörper anschließenden Abkühlphase ergeben sich dadurch innere Spannungen in den Federkörpern. Die Dauerhaltbarkeit und Isolierung von akustisch wirksamen, hochfrequenten Schwingungen sind dementsprechend wenig befriedigend.

Der Erfindung liegt die Aufgabe zugrunde, eine solche Hülsengummifeder derart weiterzuentwickeln, daß sich eine verbesserte Dauerhaltbarkeit und Isolierung akustisch wirksamer, hochfrequenter Schwingungen ergibt.

Diese Aufgabe wird erfindungsgemäß bei einer gattungsgemäßen Hülsengummifeder mit den kennzeichnenden Merkmalen von Anspruch 1 gelöst. Auf vorteilhafte Ausgestaltung nehmen die Unteransprüche bezug.

Bei der erfindungsgemäßen Hülsengummifeder ist es vorgesehen, daß die Zwischenmasse aus zwei einander gegenüberliegenden Halbschalen besteht, die dem Profil des äußeren Federkörpers spiegelbildlich zugeordnet sind, daß die Halbschalen und der äußere Federkörper unlösbar verbunden sind und daß der innere Federkörper unter radialer Zusammenpressung des äußeren Federkörpers in den von den Halbschalen umschlossenen Freiraum in axialer Richtung eingepreßt ist. Zugspannungen sind auf diese Weise in den Federkörpern der erfindungsgemäßen Hülsengummifeder vollständig vermieden, was die Erzielung einer guten Dauerhaltbarkeit wesentlich verbessert. Auch sind die beiden Federkörper durch die Verwendung einer Zwischenmasse in Gestalt von Halbschalen innerhalb der Reihenschaltung elastisch gegeneinander verspannt, was eine Reduzierung der dynamischen Steifigkeit bedingt und als Folge hiervon eine Verbesserung der Isolierung akustisch wirksamer, hochfrequenter Schwingungen.

Die Federkörper können aus Gummisorten einer von einander abweichenden Federelastizität bestehen, um die diesbezüglichen Eigenschaften noch weiter zu verbessern. In dieser Hinsicht hat es sich als vorteilhaft bewährt, wenn der innere Federkörper aus Gummi mit besonders ausgeprägter Dämpfungscharakteristik besteht und der äußere Federkörper aus Gummi mit besonders wenig ausgeprägter Dämpfungscharakteristik.

In der erfindungsgemäßen Hülsengummifeder sind zwei unabhängig voneinander bewegliche Zwischenmassen enthalten, was eine voneinander unabhängige Auslegung ermöglicht und die Erzielung von Tilgereffekten in zwei voneinander abweichenden Frequenzbereichen. Zusätzlich besteht die Möglichkeit, die Verbindungsöffnung zwischen den flüssigkeitsgefüllten Kammern kanalartig zu gestalten und so zu dimensionieren, daß sich in einem weiteren Frequenzbereich eine Resonanzbewegung in dem von der Verbindungsöffnung umschlossenen Flüssigkeitsvolumen ergibt und als Folge hiervon ein weiterer Tilgereffekt. Dieser läßt sich ebenso wie die vorstehend angesprochenen Effekte zur Unterdrückung von Schwingungen besonders störender Frequenzen benutzt werden. Die dabei zur Anwendung gelangenden Auslegungsregeln sind bekannt.

Der Federkörper kann im Zwischenraum der Halbschalen durch eine membranartige gestaltete Pufferwand gebildet sein, welche zumindest im mittleren Bereich ihrer Umfangserstreckung einen Abstand von dem inneren Federkörper aufweist. Der durch den Abstand gebildete Zwischenraum ist zweckmäßig mit Luft gefüllt und mit der Atmosphäre verbunden, was eine Abkopplung akustisch wirksamer, hochfrequenter Schwingungen begünstigt, die quer zur Erstreckung der Pufferwand in die Hülsengummifeder eingeleitet werden.

Nach einer weiteren Ausgestaltung ist es vorgesehen, daß der äußere Federkörper im Bereich der Halbschalen mit einstückig in die Kammern vorspringenden Anschlagpuffern versehen ist und daß die Anschlagpuffer der Symmetrieachse der Hülsengummifeder spiegelbildlich zugeordnet sind. Einer Überlastung wird hierdurch wirksam begegnet. Die Symmetrieachse erstreckt sich zweckmäßig parallel zur Belastungsrichtung und mittig durch eines der einander gegenüberliegenden Kammerpaare.

Den Halbschalen kann zumindest an einem Ende ein Führungselement zugeordnet sein, wobei das Führungselement an dem den inneren Federkörper innenseitig abstützenden Anschlußteil festgelegt ist. Insbesondere einer unerwünscht großen Relativverlagerung der beiden Anschlußteile in axialer Richtung kann hierdurch wirksam begegnet werden.

Als besonders zweckmäßig hat es sich erwiesen, wenn ein solches Führungselement flanschähnlich gestaltet und mit einem Ringvorsprung versehen ist, der die Halbschalen außenseitig umgreift. Die Größe der verwendungsbedingten Ausweichbewegungen läßt sich hierdurch auf ein bestimmtes Maß begrenzen, was für bestimmte Anwendungen von Vorteil ist. Zweckmäßig sind entsprechende Führungselemente an beiden Enden der Hülsengummifeder vorgesehen und verhindern in diesem Falle zugleich eine Relativverlagerung des inneren Federkörpers in bezug auf den äußeren Federkörper während der bestimmungsgemäßen Verwendung.

Die Halbschalen können ein im wesentlichen kreissegmentförmiges Profil haben, welches der Symmetrieachse im Sinne der vorstehenden Darlegungen spiegelbildlich zugeordnet ist. Der Winkel des zugehörigen Kreissegmentes beträgt zweckmäßig 90 bis 160 Grad.

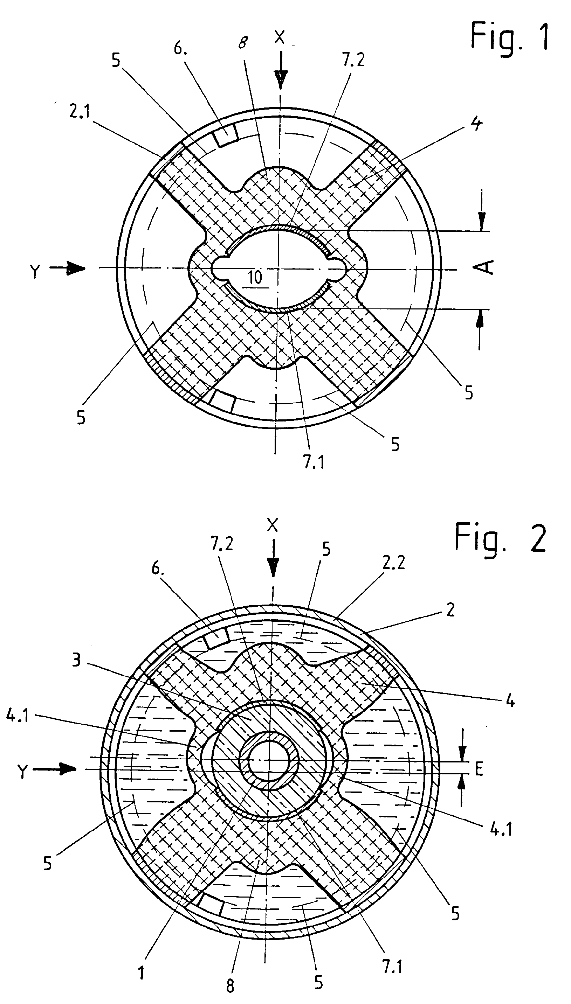

Der Gegenstand der Erfindung wird nachfolgend anhand des in der Zeichnung gezeigten Ausführungsbeispieles weiter verdeutlicht. Es zeigen:
Figur 1
   Den mit einem Teil des äußeren Anschlußteiles zusammenvulkanisierten, äußeren Federkörper, an den im Bereich seines Innendurchmessers zusätzlich zwei Halbschalen anvulkanisiert sind in quergeschnittener Darstellung.
Figur 2
   Die das in Figur 1 gezeigte Teil enthaltende, gebrauchsfertige Hülsengummifeder in quergeschnittener Darstellung.
Figur 3
   Die in Figur 2 gezeigte Hülsengummifeder in längsgeschnittener Darstellung.

Die in den Figuren 1 bis 3 gezeigte Hülsengummifeder umfaßt zwei einander in achsparalleler Zuordnung umschließende Anschlußteile 1, 2, die einen radialen Abstand voneinander haben, wobei in dem durch den Abstand gebildeten Spalt zwei in radialer Richtung aufeinanderfolgende Federkörper 3, 4 aus gummielastischem Material vorgesehen sind, von denen der äußere Federkörper 4 flüssigkeitsgefüllte Kammern 5 mit einem im wesentlichen kreuzförmig gestalteten Profil umschließt, wobei die beiden einander in X-Richtung gegenüberliegenden Kammern des äußeren Federkörpers 4 durch eine kanalartig ausgebildete Dämpfungsöffnung 6 verbunden sind und wobei zwischen dem äußeren und dem inneren Federkörper 4, 3 eine Zwischenmasse 7 vorgesehen ist. Die Zwischenmasse 7 umfaßt die beiden Halbschalen 7.1 und 7.2, welche einer gedachten Ebene, die sich in senkrechter Richtung erstreckt, spiegelbildlich zugeordnet und unlösbar mit dem äußeren Federkörper 4 verbunden sind, zweckmäßig während dessen Formgebung und Verfestigung durch Vulkanisierung. Die Halbschalen 7.1., 7.2 haben nach der Verfestigung des Federkörpers 4 in der Symmetrieebene den Abstand A voneinander .Der äußere Federkörper 4 und die Halbschalen 7.1 und 7.2 haben bei ihrer Erzeugung das in Figur 1 gezeigte Profil. Das Profil des Federkörpers 4 weist zusätzlich zu den vorstehend bereits erwähnten Merkmalen die Anschlagpuffer 8 auf, welche innerhalb der Umfangserstreckung der Halbschalen 7.1 und 7.2 vorgesehen und einstückig mit dem äußeren Federkörper 4 ausgebildet sind. Ihr Profil ist im wesentlichen kreissegmentförmig begrenzt und der Symmetrieebene der Hülsengummifeder spiegelbildlich zugeordnet. Die Symmetrieebene teilt zugleich die in X-Richtung, d.h. der Belastungsrichtung, hintereinanderliegenden Kammern mittig.

Die den äußeren Federkörper 4 begrenzenden Wandungen sind in der Zwischenzonen der Halbschalen 7.1 und 7.2 als membranartig dünn gestaltete Pufferwände 4.1 ausgebildet und radial nach außen vorgewölbt. Das ihnen bei der Herstellung verliehene Profil läßt sich als im wesentlichen als halbkreisförmig beschreiben.

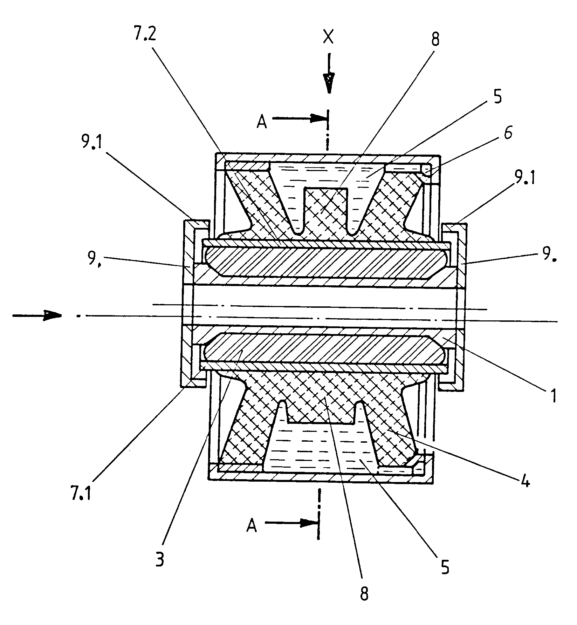

Das äußere Anschlußteil 2 ist zweiteilig gestaltet und umfaßt neben einem in sich geschlossenen zylindrischen Außenrohr 2.2 ein Fensterrohr 2.1, welches flüssigkeitsdicht in das Außenrohr 2.2 einfügbar und im Bereich der Kammern 5 mit radial nach außen offen Durchbrechungen versehen ist. Das Fensterrohr 2.1 umschließt darüberhinaus die Ein- und Auslaßöffnungen der Dämpfungsöffnung 6 sowie einen Teil des Profils derselben auf ihrer gesamten Länge (Fig. 3). Dieses weist keinerlei Veränderungen auf, wodurch die Dämpfungsöffnung insgesamt kanalartig gestaltet ist und wodurch das enthaltene Flüssigkeitsvolumen bei Einleitung von Schwingungen einer bestimmten Frequenz in eine Resonanzbewegung versetzbar ist.

Der innere Federkörper 3 ist schlauchähnlich gestaltet und in der in Figur 3 gezeigten Weise auf dem rohrförmig gestalteten, inneren Anschlußteil 1 gelagert. Er bewirkt nach dem Einfügen in den von den Halbschalen 7.1, 7.2 umschlossenen Freiraum 10 eine radial gerichtete Auseinanderbewegung derselben und die Entstehung von Druckvorspannungen sowohl in dem inneren als auch in dem äußeren Federkörper, was im Bereich des letzteren anhand der Aufweitung des Profils der Stege zeichnerisch verdeutlicht ist. Die im unteren Bereich angeordneten Stege des äußeren Federkörpers 4 haben in Umfangsrichtung eine größere Erstreckung als die im oberen Bereich angeordneten Stege. Hierdurch ergibt sich beim Einfügen des inneren Federkörpers im Bereich der unteren Stege eine in bezug auf die oberen Stege eine geringere, radiale Stauchung und eine Relativverlagerung der Achse des inneren Anschlußstücks 1 um das Maß E nach oben. Dieses ist so bemessen, daß sich beim Aufbringen der bestimmungsgemäß zu tragenden Last eine zumindest angenähert vollständige Rückstellung in die Mittellage ergibt. Die Relativbeweglichkeit der Anschlußteile 1.2 ist dadurch anschließend in jeder beliebigen Richtung von übereinstimmender Größe. Die Pufferwände 4.1 des äußeren Federkörpers 4 erfahren zugleich eine Abflachung ihres ursprünglich halbkreisförmigen Profils. Zwischen ihrer radial nach innen weisenden Seite und der Außenseite des inneren Federkörpers 3 bleibt indessen zumindest im mittleren Bereich ein luftgefüllter Abstand weiterhin erhalten.

Das Einfügen des Fensterrohrs 2.1 in das flüssigkeitsundurchlässige Außenrohr 2.2 des äußeren Anschlußteiles erfolgt zweckmäßig im untergetauchten Zustand. Hierdurch ist sichergestellt, daß die Kammern 5 und die Dämpfungsöffnung 6 im Anschluß an die Montage vollständig mit Flüssigkeit gefüllt sind. Das Außenrohr 2.2 wird anschließend im Bereich des die Dämpfungsöffnung 6 axial überragenden Endes in der in Figur 3 gezeigten Weise radial nach innen umgebördelt. Das in den Kammern 5 und der Dämpfungsöffnung 6 enthaltene Flüssigkeitsvolumen ist dadurch hermetisch eingeschlossen und die Hülsengummifeder vom grundsätzlichen her bereits verwendbar.

Zusätzlich sind die Halbschalen 7.1 und 7.2 an beiden Enden von Führungselementen 9 umgriffen, welche an dem den inneren Federkörper 3 innenseitig abstützenden Anschlußteil 1 festgelegt sind. Die Führungselementen 9 sind flanschähnlich gestaltet und mit die Halbschalen in einem Abstand außenseitig umgreifenden Ringvorsprüngen 9.1 versehen (Figur 3).

Zu den Eigenschaften der vorstehend beschriebenen Hülsengummifeder läßt sich folgendes ausführen:
Die Hülsengummifeder zeichnet sich durch ein besonders gutes Isolierverhalten aus in bezug auf akustisch wirksame Schwingungen, die in X-und/oder Y-Richtung eingeleitet werden, bedingt durch die gute Nachgiebigkeit in seitlicher Richtung der den äußeren Federkörper 4 im wesentlich bildenden Stege und der Pufferwände 4.1.

Die Hülsengummifeder zeichnet sich in bezug auf Schwingungen einer Amplitude von mehr als 1 Millimeter, die in Y-Richtung eingeleitet werden, durch eine große Härte aus, wodurch Führungskräfte in dieser Richtung in besonders vorteilhafter Weise übertragen werden können.

In bezug auf Schwingungen einer Amplitude von mehr als 1 mm, die in X-Richtung eingeleitet werden ergibt sich dem gegenüber eine begrenzte Nachgiebigkeit, bedingt durch die hervorragende Dämpfungswirkung des in der Dämpfungsöffnung in einer solchen Betriebssituation hin- und herverlagerten Flüssigkeitsvolumens sowie die voneinander unabhängige Relativbeweglichkeit der durch die Halbschalen 7.1 und 7.2 gebildeten Trägheitsmassen, welche sowohl in radialer Richtung nach außen als auch nach innen in einer federnd nachgiebigen Weise abgestützt sind.

## Patentansprüche

1. Hülsengummifeder mit hydraulischer Dämpfung, umfassend zwei einander in achsparalleler Zuordnung umschließende Anschlußteile (1, 2), die einen radialen Abstand voneinander haben, wobei in dem durch den Abstand gebildeten Spalt zwei in radialer Richtung aufeinander folgende Federkörper (3, 4) aus gummielastischem Material vorgesehen sind, von denen der äußere Federkörper (4), zusammen mit dem äußeren Anschlußteil (2), flüssigkeitsgefüllte Kammern (5) mit einem im wesentlichen kreuzförmig gestalteten Profil umschließt, wobei wenigstens zwei einander gegenüberliegende Kammern (5) des äußeren Federkörpers (4) durch eine Dämpfungsöffnung (6) verbunden sind und wobei zwischen dem äußeren und dem inneren Federkörper (4, 3) eine Zwischenmasse (7) vorgesehen ist, dadurch gekennzeichnet, daß die Zwischenmasse (7) aus zwei einander gegenüberliegenden Halbschalen (7.1, 7.2) besteht, die dem Profil des äußeren Federkörpers (4) spiegelbildlich zugeordnet sind, daß die Halbschalen (7.1, 7.2) und der äußere Federkörper (4) unlösbar verbunden sind und daß der innere Federkörper (3) unter radialer Zusammenpreßung des äußeren Federkörpers (4) in den von den Halbschalen (7.1, 7.2) umschlossenen Freiraum (10) eingepreßt ist.

2. Hülsengummifeder nach Anspruch 1, dadurch gekennzeichnet, daß der äußere und der innere Federkörper (4, 3) durch Gummisorten einer voneinander abweichenden Federelastizität gebildet sind.

3. Hülsengummifeder nach Anspruch 1 bis 2, dadurch gekennzeichnet, daß der äußere Federkörper (4) im Zwischenraum der Halbschalen (7.1, 7.2) durch eine membranartig dünn gestaltete Pufferwand (4.1) gebildet ist und daß die Pufferwand (4.1) zumindest im mittleren Bereich ihrer Umfangserstreckung einen Abstand von dem inneren Federkörper (3) aufweist.

4. Hülsengummifeder nach Anspruch 1 bis 3, dadurch gekennzeichnet, daß der äußere Federkörper (4) im Bereich der Halbschalen (7.1, 7.2) mit einstückig angeformten, in die Kammern (5) vorspringenden Anschlagpuffern (8) versehen ist und daß die Anschlagpuffer (8) der Symethrieachse spiegelbildlich zugeordnet sind.

5. Hülsengummifeder nach Anspruch 1 bis 4, dadurch gekennzeichnet, daß den Halbschalen (7.1, 7.2) zumindest an einem Ende ein Führungselement (9) zugeordnet ist und daß das Führungselement (9) an dem den inneren Federkörper (3) innenseitig abstützenden Anschlußteil (1) festgelegt ist.

6. Hülsengummifeder nach Anspruch 5, dadurch gekennzeichnet, daß das Führungselement (9) flanschähnlich gestaltet und mit einem Ringvorsprung (9.1) versehen ist und daß der Ringvorsprung die Halbschalen (7.1, 7.2) außenseitig umgreift.

7. Hülsengummifeder nach Anspruch 1 bis 6, dadurch gekennzeichnet, daß die Halbschalen (7.1, 7.2) ein im wesentlichen halbkreisförmig begrenztes Profil haben.

8. Hülsengummifeder nach Anspruch 5 bis 6, dadurch gekennzeichnet, daß den Halbschalen (7.1, 7.2) an beiden Enden Führungselemente (9) zugeordnet sind.

## Claims

1. A rubber sleeve spring with hydraulic damping, comprising two connection parts (1, 2) arranged one around the other, parallel to the axis, and spaced radially apart, in which, in the gap formed by the spacing, two spring bodies (3, 4) of rubber-elastic material are provided, which follow one another in the radial direction and of which the outer spring body (4), together with the outer connection part (2), encloses liquid-filled chambers (5) having an essentially cross-shaped profile, at least two chambers (5), lying opposite one another, of the outer spring body (4) being joined by a damping opening (6) and an intermediate mass (7) being provided between the outer and inner spring bodies (4, 3), characterised in that the intermediate mass (7) consists of two half-shells (7.1, 7.2) which lie opposite one another and are disposed in a mirror-inverted arrangement relative to the profile of the outer spring body (4), in that the half-shells (7.1, 7.2) and the outer spring body (4) are non-detachably joined, and in that the inner spring body (3) is pressed into the free space (10) enclosed by the half-shells (7.1, 7.2) with radial compression of the outer spring body (4).

2. A rubber sleeve spring according to claim 1, characterised in that the outer and inner spring bodies (4, 3) are composed of types of rubber of different spring elasticities.

3. A rubber sleeve spring according to either of claims 1 and 2, characterised in that, in the space between the half-shells (7.1, 7.2), the outer spring body (4) is in the form of a buffer wall (4.1) of a thin membrane-like configuration, and in that, at least in the middle region of its peripheral extent, the buffer wall (4.1) is at a distance from the inner spring body (3).

4. A rubber sleeve spring according to any of claims 1 to 3, characterised in that, in the region of the half-shells (7.1, 7.2), the outer spring body (4) is provided with integrally formed stop buffers (8) projecting into the chambers (5), and in that the stop buffers (8) are disposed in a mirror-inverted arrangement relative to the axis of symmetry.

5. A rubber sleeve spring according to any of claims 1 to 4, characterised in that a guide member (9) is provided, at least at one end, for the half-shells (7.1, 7.2), and in that the guide member (9) is fastened to the connection part (1) supporting the inner spring body (3) on the inside.

6. A rubber sleeve spring according to claim 5, characterised in that the guide member (9) is of flange-like configuration and is provided with an annular projection (9.1), and in that the annular projection engages around the half-shells (7.1, 7.2) on the outside.

7. A rubber sleeve spring according to any of claims 1 to 6, characterised in that the half-shells (7.1, 7.2) have an essentially semicircularly bounded profile.

8. A rubber sleeve spring according to either of claims 5 and 6, characterised in that the half-shells (7.1, 7.2) are provided with guide members (9) at both ends.

## Revendications

1. Ressort en caoutchouc à manchons avec amortissement hydraulique, comportant deux parties de liaison (1, 2) disposées l'une dans l'autre dans une relation parallèle à l'axe, qui sont espacées radialement l'une de l'autre par un intervalle dans lequel sont prévus deux corps de ressort (3, 4) se suivant dans une direction radiale, formés d'un matériau ayant l'élasticité du caoutchouc et dont le corps extérieur de ressort (4) entoure, en même temps que la partie extérieure de liaison (2), des chambres (5) remplies de liquide avec un profil dans l'essentiel en forme de croix, au moins deux chambres (5), situées l'une en regard de l'autre, du corps extérieur de ressort (3) étant reliées par une ouverture d'amortissement (6) et une masse intermédiaire (7) étant prévue entre le corps extérieur de ressort (4) et le corps intérieur de ressort (3), caractérisé en ce que la masse intermédiaire (7) se compose de deux demi-coquilles (7.1, 7.2) situées l'une en regard de l'autre et qui sont adaptées symétriquement au profil du corps extérieur de ressort (4), en ce que les demi-coquilles (7.1, 7.2) et le corps extérieur de ressort (4) sont reliées de façon inséparable, et en ce que le corps intérieur de ressort (3) est emmanché, en produisant une compression radiale du corps extérieur du ressort (4) dans le volume libre (10) entouré par les demi-coquilles (7.1, 7.2).

2. Ressort en caoutchouc à manchons selon la revendication 1, caractérisé en ce que le corps extérieur de ressort (4) et le corps intérieur de ressort (3) sont constitués par des catégories de caoutchouc ayant des élasticités différentes l'une de l'autre.

3. Ressort en caoutchouc à manchons selon les revendications 1 et 2, caractérisé en ce que le bord extérieur de ressort (4) est constitué, dans le volume intermédiaire des demi-coquilles (7.1, 7.2) par une mince paroi-tampon (4.1) profilée en forme de membrane et en ce que la paroi-tampon (4.1) est espacée, au moins dans une zone médiane de son étendue circonférentielle, du corps intérieur de ressort (3).

4. Ressort en caoutchouc à manchons selon une des revendications 1 à 3, caractérisé en ce que le corps extérieur de ressort (4) est pourvu, dans une zone des demi-coquilles (7.1, 7.2), de tampons de butée (8) formés d'une seule pièce et faisant saillie dans les chambres (5), et en ce que le tampon de butée (8) est adapté symétriquement à l'axe de symétrie.

5. Ressort en caoutchouc à manchons selon une des revendications 1 à 4, caractérisé en ce que les demi-coquilles (7.1, 7.2) sont associées au moins à une extrémité à un élément de guidage (9) et en ce que cet élément de guidage (9) est fixé sur la partie de liaison (1) s'appuyant intérieurement le corps intérieur de ressort (3).

6. Ressort en caoutchouc à manchons selon la revendication 5, caractérisé en ce que l'élément de guidage (9) est profilé en forme de bride et est pourvu d'une saillie annulaire (9.1) et en ce que cette saillie annulaire entoure extérieurement les demi-coquilles (7.1, 7.2).

7. Ressort en caoutchouc à manchons selon une des revendications 1 à 6, caractérisé en ce que les demi-coquilles (7.1, 7.2) ont un profil délimité essentiellement par une forme demi-circulaire.

8. Ressort en caoutchouc à manchons selon les revendications 5 et 6, caractérisé en ce que les éléments de guidage (9) sont associés aux demi-coquilles (7.1, 7.2) aux deux extrémités.
